# EUROPÄISCHE PATENTSCHRIFT

(11) **EP 1 685 010 B1**
(45) Veröffentlichungstag und Bekanntmachung des Hinweises auf die Patenterteilung: **30.01.2008**
(21) Anmeldenummer: 04818765.2
(22) Anmeldetag: 10.11.2004
(51) Int. Cl.: B60R 22/46

(54) **GURTSTRAFFER MIT AKTIVER AUSKUPPLUNG DER STRAFFERKUPPLUNG**
SEAT-BELT TENSIONER WITH A BELT COUPLING WHICH CAN BE ACTIVELY DISCONNECTED
TENDEUR DE CEINTURE DE SECURITE POURVU D'UN DISPOSITIF DE DESENCLENCEMENT ACTIF DU MECANISME DE COUPLAGE DU TENDEUR

(30) Priorität: 18.11.2003 DE 10353770
(43) Veröffentlichungstag der Anmeldung: 02.08.2006
(73) Patentinhaber: AUTOLIV DEVELOPMENT AB, 447 83 Vargarda (SE)
(72) Erfinder: PECH, Michael, 22459 Hamburg (DE); HÖFS, Stefan, 22303 Hamburg (DE)
(74) Vertreter: Müller, Karl-Ernst
(86) Internationale Anmeldenummer: PCT/EP2004/012679
(87) Internationale Veröffentlichungsnummer: WO 2005/049395

(56) Entgegenhaltungen:
- EP-A1- 1 439 098
- US-A- 4 579 294

## Beschreibung

Die Erfindung betrifft einen Gurtstraffer bestehend aus einem Gurtaufroller und einem mittels einer Strafferkupplung an dessen Gurtwelle ankuppelbaren Strafferantrieb, wobei die Strafferkupplung aus wenigstens einer zwischen einer Freigabestellung und einer Eingriffsstellung radial verschwenkbar angeordneten und in ihrer Eingriffsstellung eine lastübertragende Verbindung zwischen der Gurtwelle und dem Strafferantrieb herstellenden Kupplungsklinke besteht und die Kupplungsklinke nach Abschluss der Straffbewegung aus der Eingriffsstellung in ihre Freigabestellung dadurch zwangsgesteuert bewegbar ist, dass an der Gurtwelle eine bei Auslösung des Strafferantriebs mit der Gurtwelle in Aufwickelrichtung in Drehung versetzte und gegenüber der Gurtwelle relativ drehbar angeordnete Trägheitsmasse gelagert ist und die Kupplungsklinke und Trägheitsmasse derart miteinander gekoppelt sind, dass die Kupplungsklinke durch die am Ende des Straffvorganges mit einer größeren Drehgeschwindigkeit als die Drehgeschwindigkeit der Gurtwelle nachlaufende Trägheitsmasse aus ihrer Eingriffsstellung ausgesteuert wird.

Ein Gurtstraffer mit den vorgenannten Merkmalen ist in der älteren, nicht vorveröffentlichten und daher lediglich einen Stand der Technik gemäß Art. 54 (3) EPÜ bildenden EP 1 439 098 A1 beschrieben. Soweit bei einem derartigen Gurtstraffer die Antriebsverbindung zwischen dem Strafferantrieb und der Gurtwelle erst durch die Aktivierung einer Kupplung hergestellt wird, damit die Gurtwelle im normalen Betrieb ungehindert drehbar ist, so soll dieser Zustand einer ungehinderten Drehbarkeit der Gurtwelle auch nach erfolgtem Straffvorgang wieder gewährleistet sein, damit bei Ausrüstung des Gurtstraffers mit einer Kraftbegrenzungseinrichtung diese Kraftbegrenzungseinrichtung im Anschluss an den Straffvorgang ihre Wirkung ungehindert ausüben kann. Bei dem bekannten Gurtstraffer sind zur Ausbildung der zwangsgesteuerten Rückführung der Kupplungsklinke aus ihrer lastübertragenden Eingriffsstellung in die Freigabestellung in den Aufbau der aus zahlreichen Einzelteilen bestehenden Kupplung zwischen dem aus einem Elektromotor bestehenden Strafferantrieb und der Gurtwelle gesonderte und jeweils einer Ansteuerung bedürfende Betätigungselemente für die Kupplungsklinke integriert.

Mit dem vorbeschriebenen Gurtstraffer ist insoweit der Nachteil verbunden, dass die Kupplung zwischen Strafferantrieb und Gurtwelle einschließlich der darin angeordneten Rückführungselemente kompliziert und aufwendig in Herstellung und Montage ist, so dass der Erfindung die Aufgabe zugrunde liegt, bei einem Gurtaufroller mit den gattungsgemäßen Merkmalen die Aussteuerung der Kupplungsklinke nach Beendigung der Straffbewegung zu vereinfachen.

Die Lösung dieser Aufgabe ergibt sich aus dem Anspruch 1; eine vorteilhafte Ausgestaltung der Erfindung ist in dem Unteranspruch angegeben.

Die Erfindung sieht in ihrem Grundgedanken vor, dass die Kupplungsklinke mit einem axial von ihr abstehenden Stift in eine in der Trägheitsmasse angeordnete Steuerkurve eingreift. Mit der Erfindung ist der Vorteil verbunden, dass an der Trägheitsmasse lediglich eine Steuerkurve und an der Kupplungsklinke zusätzlich der Stift anzubringen sind, so dass der Aufwand für die Herstellung einer zwangsgesteuerten Rückführung der Kupplungsklinke aus ihrer lastübertragenden Eingriffsstellung in die Freigabestellung nicht wesentlich erhöht ist.

Es kann vorgesehen sein, dass die Steuerkurve in der Trägheitsmasse mit einem solchen Verlauf angeordnet ist, dass nach Auslösung des Strafferantriebs die Trägheitsmasse über den in der Steuerkurve liegenden Stift der in ihre Eingriffsstellung ausgesteuerten Kupplungsklinke in Aufwickeldrehrichtung der Gurtwelle mitgenommen und beschleunigt wird und der Stift bei nachlassender Drehgeschwindigkeit der Gurtwelle in der Steuerkurve bis zum Erreichen einer Endposition wandert und dabei die Kupplungsklinke radial von der Eingriffsstellung in die Freigabestellung verschwenkt.

In der Zeichnung ist ein Ausführungsbeispiel der Erfindung wiedergegeben, welches nachstehend beschrieben ist. Es zeigen:
- Fig. 1: die Kupplungsseite eines Gurtstraffers mit Gurtwelle und Strafferantrieb in einer auseinandergezogenen Darstellung,

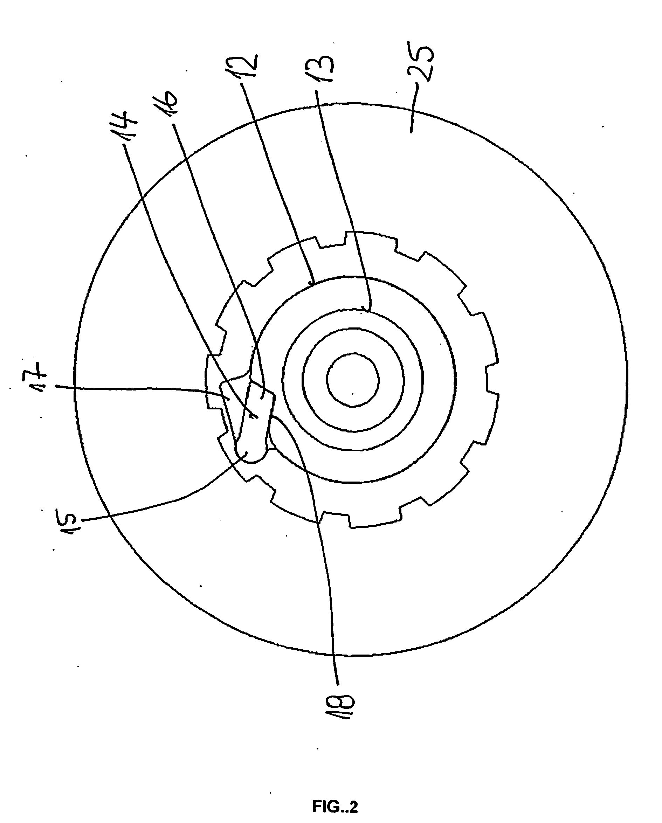

- Fig. 2: den Gurtstraffer in zusammengebautem Zustand bei eingekuppelter Verbindung zwischen Gurtwelle und Strafferantrieb.

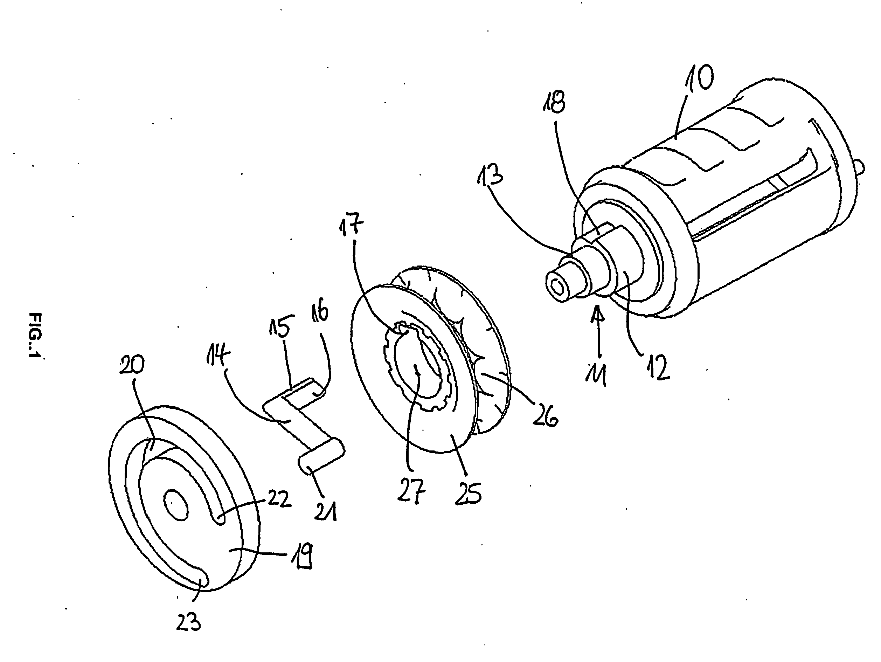

Die aus Figur 1 ersichtliche Gurtwelle 10 hat einen Wellenfortsatz 11, der seinerseits aus einem Kupplungsansatz 12 und einem axial daran anschließenden Lagerfortsatz 13 besteht.

Auf den Kupplungsansatz 12 des Wellenfortsatzes 11 ist ein als Antriebsrad 25 ausgebildeter Strafferantrieb drehbar gelagert, wobei das Antriebsrad mit 26 angedeutete kalottenförmige Ausnehmungen zur Aufnahme von nicht dargestellten Antriebskörpern, vorzugsweise Massekugeln, aufweist; ein derartiger sogenannter Kugelstraffer als Strafferantrieb für die Gurtwelle 10 ist dem Stand der Technik hinreichend bekannt.

Zwischen der zentralen Lagerausnehmung 27, mit welcher das Antriebsrad 25 auf dem Kupplungsansatz 12 der Gurtwelle 10 gelagert ist und dem Kupplungsansatz 12 ist eine Kupplungsklinke 14 angeordnet, die einen Lagerbereich 15 und einen Eingriffsbereich 16 aufweist. An der die Lagerausnehmung 27 umschließenden Innenwandung des Antriebsrades 25 ist eine Ausnehmung 17 zur Aufnahme der Kupplungsklinke 14 ausgebildet, die so bemessen ist, dass die Kupplungsklinke 14 in der Nicht-Angriffsstellung in der Ausnehmung 17 liegt, so dass sich der Kupplungsansatz 12 der Gurtwelle 10 in der Lagerausnehmung 27 des Antriebsrades 25 frei drehen kann.

Zur Herstellung der Kupplungsverbindung zwischen Gurtwelle 10 und Antriebsrad 25 ist der Kupplungsansatz 12 der Gurtwelle 10 auf seinem Umfang mit einer Kerbe 18 zur Aufnahme des Eingriffsbereichs 16 der Kupplungsklinke 14 versehen, so dass bei Verschwenken der Kupplungsklinke 14 aus ihrer in der Ausnehmung 17 liegenden Stellung der Lagerbereich 15 in Eingriff mit der Kerbe 18 des Kupplungsansatzes 12 gelangt, so dass sich die Kupplungsklinke zwischen der Ausnehmung 17 und der Kerbe 18 verspannt und dadurch die Kupplungsverbindung herstellt.

Axial neben dem Antriebsrad 25 ist auf dem Lagerfortsatz 13 eine Trägheitsmasse 19 drehbar gelagert, die eine Steuerkurve 20 aufweist, in welche ein von der Kupplungsklinke 14 axial abstehender Stift 21 eingreift. In ihrer Ruhelage ist die Trägheitsmasse 19 dabei so angeordnet, dass der Stift 21 an einem Ende der Steuerkurve 20 liegt und dadurch die Kupplungsklinke in der Ausnehmung 17 und damit außerhalb eines Eingriffs mit der Kerbe 18 festgelegt ist.

Kommt es bei Auslösung der Straffvorrichtung zu einer Drehung des Antriebsrades 25, so führt diese Relativbewegung gegenüber der zunächst noch still stehenden Trägheitsmasse 19 zu einer unmittelbaren Verschwenkung der Kupplungsklinke 14 und deren Eingriff mit dem Lagerbereich 15 in die Kerbe 18. Aufgrund der so hergestellten Kupplungsverbindung wird die weitere Drehung des Antriebsrades 25 in eine gleichlaufende Drehung der Gurtwelle 10 umgesetzt. Lässt am Ende des Straffvorganges die Drehgeschwindigkeit von Gurtwelle 10 und Antriebsrad 25 nach, dreht sich die Trägheitsmasse 19 aufgrund ihrer Masseträgheit mit etwa konstanter Geschwindigkeit weiter, so dass mit zunehmender Vergrößerung der Relativgeschwindigkeit zwischen Gurtwelle 10/Antriebsrad 25 und Trägheitsmasse 19 der Stift 21 der Kupplungsklinke 14 in der Steuerkurve 20 an das andere Ende der Steuerkurve verlagert wird. Hierdurch wird die Kupplungsklinke 14 aktiv außer Eingriff mit der Kerbe 18 des Kupplungsansatzes 12 gebracht und in ihre Lage innerhalb der Ausnehmung 17 zurückgeführt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Gurtstraffer bestehend aus einem Gurtaufroller und einem mittels einer Strafferkupplung an dessen Gurtwelle (10) ankuppelbaren Strafferantrieb (25), wobei die Strafferkupplung aus wenigstens einer zwischen einer Freigabestellung und einer Eingriffsstellung radial verschwenkbar angeordneten und in ihrer Eingriffsstellung eine lastübertragende Verbindung zwischen der Gurtwelle (10) und dem Strafferantrieb (25) herstellenden Kupplungsklinke (14) besteht und die Kupplungsklinke (14) nach Abschluss der Straffbewegung aus der Eingriffsstellung in ihre Freigabestellung **dadurch** zwangsgesteuert bewegbar ist, dass an der Gurtwelle (10) eine bei Auslösung des Strafferantriebs (25) mit der Gurtwelle (10) in Aufwickelrichtung in Drehung versetzte und gegenüber der Gurtwelle (10) relativ drehbar angeordnete Trägheitsmasse (19) gelagert ist und die Kupplungsklinke (14) und Trägheitsmasse (19) derart miteinander gekoppelt sind, dass die Kupplungsklinke (14) durch die am Ende des Straffvorganges mit einer größeren Drehgeschwindigkeit als die Drehgeschwindigkeit der Gurtwelle (10) nachlaufende Trägheitsmasse (19) aus ihrer Eingriffsstellung ausgesteuert wird, **dadurch gekennzeichnet, dass** die Kupplungsklinke (14) mit einem axial von ihr abstehenden Stift (21) in eine in der Trägheitsmasse (19) angeordnete Steuerkurve (20) eingreift.

2. Gurtstraffer nach Anspruch 1, **dadurch gekennzeichnet, dass** die Steuerkurve (20) in der Trägheitsmasse (19) mit einem solchen Verlauf angeordnet ist, dass nach Auslösung des Strafferantriebs (25) die Trägheitsmasse (19) über den in der Steuerkurve (20) liegenden Stift (21) der in ihre Eingriffsstellung ausgesteuerten Kupplungsklinke (14) in Aufwickeldrehrichtung der Gurtwelle (10) mitgenommen und beschleunigt wird und der Stift (21) bei nachlassender Drehgeschwindigkeit der Gurtwelle (10) in der Steuerkurve (20) bis zum Erreichen einer Endposition wandert und dabei die Kupplungsklinke (14) radial von der Eingriffsstellung in die Freigabestellung verschwenkt.

## Claims

1. Seat belt tensioner comprising a belt retractor and a belt drive (25) which can be coupled to a belt shaft (10) thereof by means of a tensioner coupling, said tensioner coupling comprising of at least one coupling latch (14) radially movably arranged between a release position and an engagement position, said coupling latch (14) producing a load-transmitting connection between the belt shaft (10) and belt drive (25) when in its engagement position and moving forcibly controlled out of the engagement position and into the release position at the conclusion of the coupling movement by that an inertial mass (19) is mounted on the belt shaft (10) and is rotationally arranged in relation to the belt shaft (10) and is rotationally displaced in the direction of winding when the belt drive (25) is released from the belt shaft (10), and that the coupling latch (14) is coupled to the inertial mass (19) in such a manner that the inertial mass (19), which runs behind and has a greater rotational speed than the belt shaft (10) at the end of the coupling step, drives the coupling latch (14) out of its engagement position, **characterized in that** the coupling latch (14) engages a cam (20) arranged in the inertial mass (19) using a pin (21) axially protruding from the coupling latch (14).

2. Seat belt tensioner according to claim 1, **characterized in that** the cam (20) is arranged in the inertial mass (19) with such a shape that, after the release of the belt drive (25), the pin (21) of the coupling latch (14), this pin being located in the cam (20) and the coupling latch having been driven out of its engagement position, takes along and accelerates the inertial mass (19) in the direction of winding of the belt shaft (10), and that the pin (21) migrates within the cam (20) until reaching an end position when the rotational speed of the belt shaft (10) slows down, thereby radially swinging the coupling latch (14) from the engagement position into the release position.

## Revendications

1. Tendeur de ceinture, formé par un enrouleur de ceinture et un élément d'entraînement du tendeur (25) pouvant être couplé au moyen d'un coupleur à l'arbre d'enroulement (10) de celui-ci, le coupleur du tendeur étant formé par au moins un cliquet d'accouplement (14), monté de manière à pouvoir pivoter dans le sens radial entre une position de déblocage et une position d'engagement et destiné à établir, dans sa position d'engagement, un assemblage de transmission de force entre l'arbre d'enroulement (10) et l'élément d'entraînement du tendeur (25), et le cliquet d' accouplement (14), à la fin d'un mouvement du tendeur, pouvant être déplacé par commande forcée hors de la position d'engagement dans sa position de déblocage, par le fait que sur l'arbre d'enroulement (10) est logée une masse d'inertie (19), entraînée en rotation avec l'arbre d'enroulement (10) dans le sens de déroulement lors du déclenchement de l'élément d'entraînement du tendeur (25) et agencée de manière à pouvoir tourner par rapport à l'arbre d'enroulement (10), et le cliquet d'accouplement (14) et la masse d'inertie (19) sont couplés l'un à l'autre de telle sorte que le cliquet d'accouplement (14) est amené hors de sa position d'engagement par la masse d'inertie (19) finissant sa course à la fin du processus de prétensionnement avec une vitesse de rotation supérieure à la vitesse de rotation de l'arbre d'enroulement (10), **caractérisé en ce que** le cliquet d'accouplement (14) s'engage avec un téton (21), formant une saillie axiale sur ce dernier, dans une courbe de commande (20) réalisée dans la masse d'inertie (19).

2. Tendeur de ceinture selon la revendication 1, **caractérisé en ce que** la courbe de commande (20) est réalisée dans la masse d'inertie (19) avec un tracé tel que, après le déclenchement de l'élément d'entraînement du tendeur (25), la masse d'inertie (19) est entraînée dans le sens d'enroulement de l'arbre d'enroulement (10), par l'intermédiaire du téton (21), positionné dans la courbe de commande (20), du cliquet d'accouplement (14) amené hors de sa position d'engagement, et est accélérée, et le téton (21), au fur et à mesure que la vitesse de rotation de l'arbre d'enroulement (10) décline, se déplace dans la courbe de commande (20) jusqu'à atteindre une position de fin de course et, à cette occasion, fait pivoter le cliquet d'accouplement (14) dans le sens radial depuis la position d'engagement dans la position de déblocage.
